# EUROPEAN PATENT APPLICATION

(11) **EP 2 827 277 A1**
(43) Date of publication of application: **21.01.2015**
(21) Application number: 13176700.6
(22) Date of filing: 16.07.2013
(51) Int. Cl.: G06F 21/62

(54) **Privacy protection in personalisation services**

(71) Applicant: ALCATEL LUCENT, 92100 Boulogne-Billancourt (FR); INRIA - Institut National de Recherche en Informatique et en Automatique, 78153 Le Chesnay Cedex (FR)
(72) Inventor: Bouzid, Makram, 91620 NOZAY (FR); Kostadinov, Dimitre Davidov, 91620 NOZAY (FR); Aghasaryan, Armen, 91620 NOZAY (FR); Gambs, Sébastien, 35000 RENNES (FR); Betge-Brezetz, Stéphane, 91620 NOZAY (FR)
(74) Representative: Camus, Olivier Jean-Claude

(57) **Abstract**

The invention relates to a method (100) for privacy protection in personalized services, the method (100) comprising the steps of:
- Generate (101), via a profile generation module of a client device, a profile of an end user,
- Generate (102), via a bloom filter module of the client device, a bloom filtered profile from the end user profile,
- generate (103), via a cluster identity computation module of the client device, a cluster ID corresponding to the end user profile,
- modify (104), via a modifying module of the client device, the bloom filtered profile to preserve user privacy,
- Send (105), from the client device, the cluster ID determined and the bloom filtered profile modified to an aggregator node,
- Aggregate (106) the bloom filtered profile modified received, this aggregation being realized by the aggregator node.

## Description

### FIELD OF INVENTION

The present invention relates to a method for privacy protection in personalized services and relates also to a client device for privacy protection in personalized services.

### BACKGROUND

Owing to the huge mass of content available over the World Wide Web, end users accessing content provided by service providers are often provided assistance by the service providers in making a selection of content.

Conventionally known techniques, such as content based recommendation, collaborative recommendation, etc., are used to generate recommendations to enable such selection by the end users. In content based recommendation, the end users are recommended content, services or products which are similar to the content, services or products used or liked by the end users in the past or which match the interest or choice of the end user. In collaborative recommendation, the end user is recommended content, services or products which are similar to the content, services or products used or liked by other users having similar or same interest or choices.

In an example of content based recommendation, a movie review website may monitor an end user to regularly view a certain category of movies, say animated movies. Accordingly, every time an animated movie is available for view, the end users may be provided a recommendation, such as a notification or an alert, for example, to download the movie by making relevant payments. In another example, a search engine portal may monitor and collect information pertaining to the search query strings used by an end user and may recommend to the end user, alternate search query strings based on past results viewed by him.

Similarly, in collaborative recommendation, also known as collaborative filtering, service providers may provide targeted advertisements to an end user where these advertisements pertain to product or services that have been preferred by other end users that have similar interests and preferences as the end user. For example, an internet protocol television (IPTV) service provider may recommend television shows or movies to the end user, if the television shows or movies have been viewed by other end users whose interests match the interests of the end user.

In another example of collaborative recommendation, a web portal may recommend certain websites to the end user if the websites have been liked by other end users having an interest profile similar to that of the end user. Further, a service provider (for example through a mobile application) may suggest places to visit or places to dine at, etc., to an end user based on the places visited or reviewed by other end users having a similar interest profile.

The World Wide Web of today is witnessing a plethora of personalized/recommendation services and data analytics applications requiring the end-users to provide their profile information (part of which could be highly sensitive) to the content/service provider. Although most of these end-users would prefer not to give away their sensitive profile information to the content/service providers in return for the personalized, recommendation and analytics services they seek, currently lacks a practical architecture enabling end-users to avail from these services without opting-in to share their sensitive profile information with the content/service providers. As of today, users have no option but to trust the content/service provider with their sensitive profile information in return for the personalized services they seek.

Moreover, in spite of end-users agreeing with the content/service provider to analyze their data for the specific use-cases and intended applications as mutually agreed upon by the end-users and the service providers, the presence of large amount of sensitive user data in the hands of a service provider opens the way for a large number of attacks. Amongst the attacks, the presence of an increasing amount of personal data that is automatically gathered and stored on servers, and exposed and processed by different applications and services, is prone to privacy breaches arising from negligence, abusive use, internal attacks, external attacks, and even the most secured servers are not spared. Attackers could also exploit some user information publically available on the Internet to identify users based on their data available at a given service/content provider server, and extract or infer private information, that could be sensitive, about them.

### SUMMARY OF THE INVENTION

Accordingly, the present invention is directed to a method for privacy protection in personalized services allowing to protect the privacy of end users by protecting their identity, the content of the actions they performed on a recommendation system as well as their profile information.

To achieve these advantages, and in accordance with the purpose of the invention as embodied, the present invention relates to a method for privacy protection in personalized services, the method comprising the steps of:
- generate, via a profile generation module of a client device, a profile of an end user,
- generate, via a bloom filter module of the client device, a bloom filtered profile from the end user profile,
- modify, via a modifying module of the client device, the bloom filtered profile to preserve user privacy,
- generate, via a cluster identity computation module of the client device, a cluster ID corresponding to the end user profile,
- send, via a transmitter of the client device, the cluster ID determined and the bloom filtered profile modified to an aggregator node,
- aggregate bloom filtered profile modified received, this aggregation being realized by the aggregator node.

The method according to the embodied invention allows end users to get personalized content recommendations or targeted ads from third-party content/service providers without revealing their real preferences (each user is assigned to a cluster locally on their device based on their user profile, and then the privacy preserving transformed profile is sent anonymously to an aggregator node for group profile generation and external content/ads injection).

The method according to the embodied invention preserves the end-user from several types of privacy attack (either from the aggregator node or from the content injector, or from any other entity able to observe the end-user traffic in the network).

In a not limited embodiment, the cluster ID is determined by a locality sensitive hashing applied on the end user profile.

In a not limited embodiment, the locality sensitive hashing is applied on the end user profile generated in the step of generating.

In a not limited embodiment, the locality sensitive hashing is applied on the bloom filtered profile.

In a not limited embodiment, the sending uses an anonymous communication channel.

In a not limited embodiment, the sending uses an onion router.

In a not limited embodiment, the modifying is realized by slicing the bloom filtered profile.

In a not limited embodiment, the modifying is realized by random bit altering of the bloom filtered profile.

In a not limited embodiment, the aggregation aggregates bloom filtered profiles modified from several end users comprising similar interest of contents or services.

In a not limited embodiment, the aggregation identifies aggregates patterns of bloom filtered profiles modified from several end users comprising similar interest of contents or services.

In a not limited embodiment, the aggregation computes frequency of bits in bloom filtered profiles modified from several end users comprising similar interest of contents or services.

In a not limited embodiment, the method comprises a step of selecting external content from a third-party content or service providers matching a bloom filtered profiles aggregation of several end users comprising similar interest of contents or services.

In a not limited embodiment, the method comprises a step of sending the selected external content to several end users matching to the third-party content or service providers.

In a not limited embodiment, the sending is realized on an anonymous communication channel.

An embodiment of the invention relates also to a client device for privacy protection in personalized services comprising:
- a profile generation module construed and arranged to generate a profile of an end user,
- a bloom filter module construed and arranged to generate a bloom filtered profile from the end user profile,
- a modifying module construed and arranged to modify the bloom filtered profile to preserve user privacy,
- a cluster identity computation module construed and arranged to generate a cluster ID corresponding to the end user profile,
- a transmitter construed and arranged to send the cluster ID determined and the bloom filtered profile modified to an aggregator node.

### BRIEF DESCRIPTION OF THE FIGURES

The detailed description is described with reference to the accompanying figures. In the figures, the same numbers are used throughout the figures to reference like features and components. Some embodiments of methods in accordance with embodiments of the present subject matter are now described, by way of example only, and with reference to the accompanying figures, in which:
- Figure 1 illustrates a method for privacy protection in personalized services,
- Figure 2 illustrates a client device and an aggregator node adapted to implement steps of the method for privacy protection in personalized services,
- Figure 3 illustrates a first not limited embodiment of a method for privacy protection in personalized services,
- Figure 4 illustrates a second not limited embodiment of a method for privacy protection in personalized services,
- Figure 5 illustrates a fourth not limited embodiment of a method for privacy protection in personalized services.

### DESCRIPTION OF EMBODIMENTS

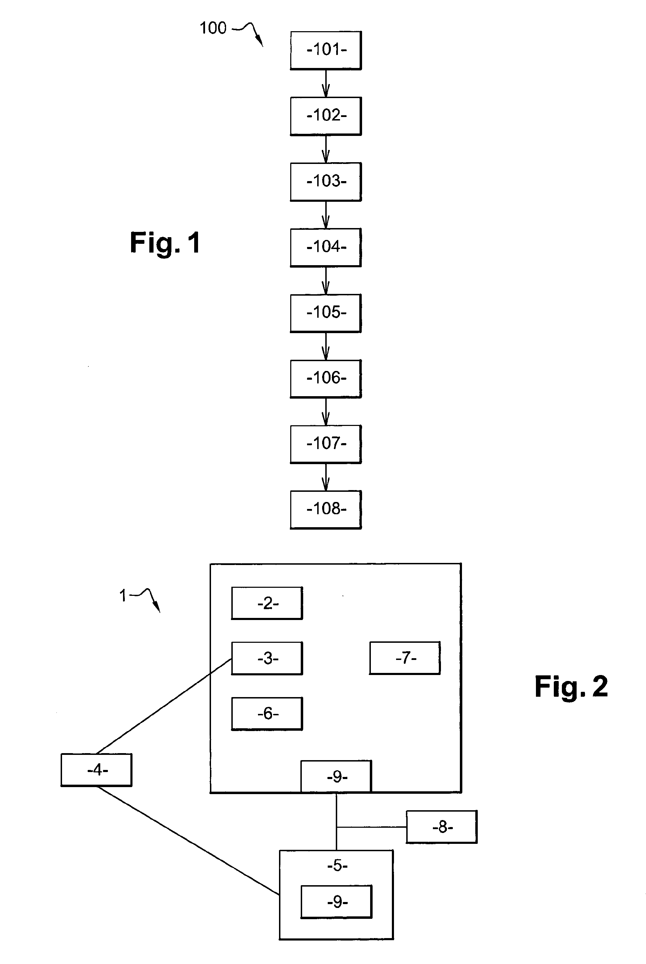

The figure 1 illustrates in a not limited embodiment, a method 100 for privacy protection in personalized services to protect confidential and personal information of the end users using their client devices to avail of services or view content recommended by a service provider through a network.

In a not limited embodiment, the method 100 comprises a step 101 of generating, via a profile generation module 2 of a client device 1, a profile of an end user.

In a not limited embodiment, the profile generation module 2 is installed in the client device 1 of the end user. The client device 1 may be a computing device, such as, a personal computer, a minicomputer, a server, a multiprocessor system, a laptop, a cellular communicating device, such as a personal digital assistant, a smart phone, a mobile phone; and the like.

The profile generation module 2 may be implemented as a software tool, firmware, application plug-in, etc. The profile generation module generates a profile of the end user corresponding to an interest profile of the end user based on the personal choices and preferences of the end user. In one implementation, the profile generation module 2 may interact with various applications through an application programming interface (API) to determine the personal choices and preferences. For example, the profile generation module 2 may obtain information from the media players regarding video and audio files played by an end user, or the profile generation module 2 may obtain the browsing history of the end user from the web browser and so on.

In a not limited embodiment, the method 100 comprises a step 102 of generating 103, via a bloom filter module 3 of the client device 1, a bloom filtered profile from the end user profile generated in the step 101. Bloom filters are for example disclosed by the following document and are well know by the man skill in the art: B.H. Bloom. Space/time trade-offs in hash coding with allowable errors. Commun. ACM 13, 7 (July 1970), 422-426.

The bloom filtered profile corresponding to the real user profile is generated using bloom filters' parameters provided by a Global LSH and Bloom Filters parameterization module 4 communicating with the bloom filter module 3 of the client device 1 and an aggregation node 5. The bloom filter parameters are provided by the Global LSH and Bloom Filters parameterization module 4 in order to use the same bloom filter functions for all end users and obtain coherent clustering results.

Besides, the bloom filter parameters are m, the size of the filter in bits, as well as k, the number of hash functions, and their seeds. These bloom filter parameters have to be tuned depending on the number of items and acceptable level of false positives. Indeed, while in a bloom filter the probability of having false negative (*i.e*., believing that an item is not in the profile while the item belongs to it) is null, there is a possibility of having a false positive (*i.e.,* believing that an item is in the profile while it is not). More precisely, the probability of having a false positive when n items have been included in a bloom filter of size m using k hash functions is roughly 1 - (1 - 1^{nk}/m)^{k}.

In a not limited embodiment, the method 100 comprises a step 103 of generating, via a cluster identity computation module 6 of the client device 1, a cluster ID corresponding to the end user profile.

For that embodiment, in one implementation, the profile generation module 2 may store the information pertaining to the end user as a set of key-value pair, where the key stores items, or category or tags associated with the items. For example, metadata associated with items like websites, songs, videos, etc., is stored as keys. At the same time, the value corresponding to a key is also stored. The value is indicative of an interest level of the end user in the corresponding key.

Then, the various sets of key-value pair are accessed by the cluster identity computation module 6 running on the client device 1 of the end user. The cluster identity computation module 6 analyzes the various sets of key-value pair to determine a probable cluster (or group) to which the end user may pertain to. For example, in one implementation, the cluster identity computation module 6 may generate meta-tags based on the various sets of key-value pair. These meta-tags may be compared to a pre-defined list of interest groups (or clusters) and a cluster identity ID indicative of the cluster to which the end user pertains to may be determined. End users who have similar or same interests are categorized into the same cluster using conventional techniques such as Locality Sensitive Hashing (LSH) techniques or semantic based clustering, etc. Such use of Locality Sensitive Hashing techniques to offer a privacy preserving personalization system is well known by the man skilled in the art and are for example described in the document WO2012146508. LSH techniques are disclosed in the following documents: P. Indyk, and R. Motwani. Approximate nearest neighbor: Towards removing the curse of dimensionality. In Proceedings of the Symposium on Theory of Computing, 1998.

For example, an end user C, interested in items X and Y, may be categorized into a cluster represented by say group id 100, wherein another end user, user D interested in items Z and U, may be categorized into another interest cluster represented by say cluster id 200. It should be appreciated that all the processing done by the profile generation module 2 and the cluster identity computation module 6 and data generated as a result thereof is not transmitted outside the client device 1 of the end user.

More particularly, LSH (Locality Sensitive Hashing) is applied on the user profile (either real user profile or transformed (i.e. on the bloom filtered profile)) locally on their client device 1, to determine to which cluster they should belong (*i.e*. their cluster ID) while preserving users' privacy. The hash function parameters used by LSH are provided by the Global LSH and Bloom Filters parameterization module 4 in order to use the same hash functions for all users and obtain coherent clustering results. These parameters include the seeds of random number generators, the size of the LSH key to generate, the number of iterations (depending on population size and content volume) and the family of hash functions used. Usually, the LSH parameters depend on the number of end users and the expected cluster's size. For example, if LSH is based on cosine similarity, then the number of clusters is equal to 2^{K} where K is the key size or the number of random vectors used for clustering. Thus, if one wants to have 32 clusters, then there should be 5 random vectors shared among end users for local clustering.

Depending on how the LSH mechanism and the Bloom filters representation of the profile are entwined (in parallel or sequentially), the parameterization of the LSH mechanism and the bloom filters can be done independently or not.

In a not limited embodiment, the method 100 comprises a step 104 of modifying, via a modifying module 7, the bloom filtered profile to preserve user privacy.

The modifying module 7 may implement various techniques so as to ensure privacy of the end user. For example, the modifying module 7 may perform random bit altering (also named flipping) of the bloom filtered profile or slicing the bloom filtered profile.

In the last implementation, the modifying module 7 slices the bloom filtered profile (i.e. profile information of the end users) in multiple segments, each segment comprising of one or more sets of bit of the bloom filtered profile. The modifying module 7 ensures that no segment of the profile information of the end user by itself contains enough profile information that can be used to construct the complete interest profile and infer the identity of the end user.

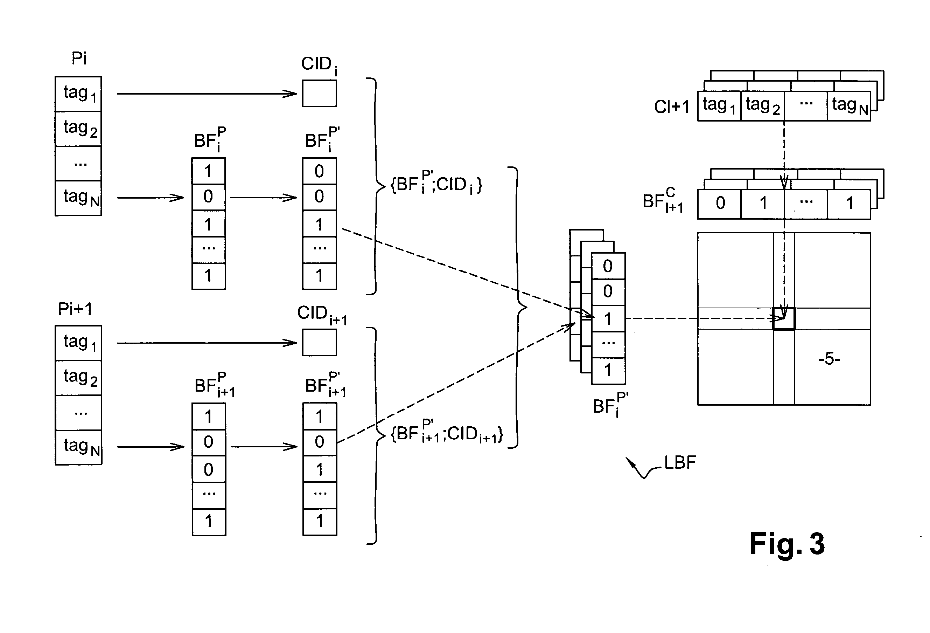

Concerning the flipping, the modifying module 7 randomly perturbs the bloom filtered profile BF^{P} by flipping some bit of the bloom filtered profile. The bloom filtered profile flipped is referenced BF^{P'} on the figure 3. Such method of flipping is known by the man skilled in the art and is described for instance in the document named "Non-interactive Differentially-Private Similarity Computation on Bloom filters. Inc Proc. Of SSS 2012, LNCS 7596, pp. 202-216, 2012."

In a not limited embodiment, the method 100 comprises a step 105 of sending, from the client device 1, the cluster ID determined and the bloom filtered profile modified to the aggregator node 5. The cluster ID determined and the bloom filtered profile modified may be sent on an anonymous communication channel 8 using an onion router. Onion routing is a technique for anonymous communication over a network. In the onion routing technique data packets are repeatedly encrypted and then sent through several network nodes called onion routers. Each onion router removes a layer of encryption to uncover routing instructions, and sends the data packet to the next router where this is repeated. This prevents these intermediary nodes from knowing the origin, destination, and contents of the data packet. The said implementation ensures that the client device transmitting the profile information is unidentifiable. In a not limited embodiment, the modifying module 7 may employ bloom filtered profile slicing (or flipping) and onion routing to ensure that the end user is not identified by the aggregation node 5.

In a not limited embodiment, the method 100 comprises a step 106 of aggregating a plurality of bloom filtered profiles modified received, this aggregation being realized by the aggregator node 5 comprising a group aggregator module 9.

In a not limited embodiment illustrated in figure 3:
- Several (only two are depicted for the understanding of the embodiment) end user profile Pi, Pi+1 (with i ranging from 1 to n) of two end user is generated 101 via the profile generation module 2 of two client devices 1,
- two cluster IDs ClDi and ClDi+1 corresponding to the end user profiles Pi and Pi+1 are generated 103 from the end user profile Pi and from the end user profile Pi+1 via the cluster identity computation modules 6 of the client devices 1,
- two bloom filtered profiles BF^{P} i and BF^{P} i+1 are generated 102 from the end user profiles respectively Pi and Pi+1 via the bloom filter module 3 of two client devices 1,
- two bloom filtered profile flipped BF^{P'}i and BF^{P'} i+1 are generated 104 from the bloom filtered profiles respectively BF^{P} i and BF^{P} i+1 via the modifying module 7 of two client devices 1,
- the cluster IDs ClDi and ClDi+1 generated and the bloom filtered profile flipped BF^{P'}i and BF^{P'} i+1 are sent 105, via a transmitter 9, to the aggregator node 5 over two anonymous communication channel 8,
- Several (two in the example) bloom filtered profiles flipped BF^{P'}i and BF^{P'} i+1 received by the aggregator node 5 are aggregated. More particularly, the aggregation 106 aggregates bloom filtered profiles flipped from several end users comprising similar or same interest of contents or services,
- External content Cl+1 with I ranging from 0 to n are selected 107 from a third-party content or service providers matching a profile bloom filtered flipped aggregation of several end users comprising similar or same interest of contents or services. For that purpose, the aggregator node 5 maintains a list LBF of all bloom filtered profiles flipped and when an external content (*e.g*., ads) provider would like to inject targeted content Cl+n, the latter is hashed using the same hashing functions (in order to obtain a bloom filtered external content BF^{c} l+n) as for building the bloom filtered profile and hit score of its popularity in stored profiles in the list LBF is computed to check if it is well suited for the cluster or not (a threshold could be defined and furthermore scores could be sorted between them). The aggregator node 5 computes a score for each content estimating the number of users that may be interested by this content.
- the selected external content 108 is sent to all cluster end users matching to the third-party content or service providers. The sending may be realized on the anonymous communication channel 8. The content(s) having the highest score(s) is/are then sent anonymously to the users of this cluster.

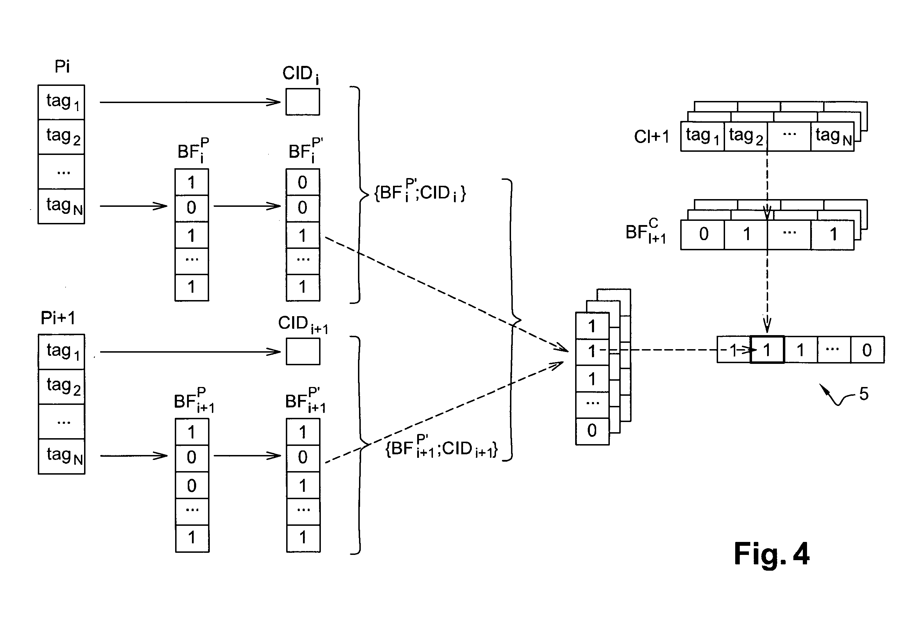

In a not limited embodiment illustrated in figure 4:
- Several (only two are depicted for the understanding of the embodiment) end user profile Pi, Pi+1 (with i ranging from 1 to n) of two end user is generated 101 via the profile generation module 2 of two client devices 1,
- two cluster IDs ClDi and CDi+1 corresponding to the end user profiles Pi and Pi+1 are generated 103 from the end user profile Pi and from the end user profile Pi+1 via the cluster identity computation modules 6 of the client devices 1,
- two bloom filtered profiles BF^{P} i and BF^{P} i+1 are generated 102 from the end user profiles respectively Pi and Pi+1 via the bloom filter module 3 of two client devices 1,
- two bloom filtered profile flipped BF^{P'}i and BF^{P'} i+1 are generated 104 from the bloom filtered profiles respectively BF^{P} i and BF^{P} i+1 via the modifying module 7 of two client devices 1,
- the cluster IDs ClDi and ClDi+1 generated and the bloom filtered profile flipped BF^{P'}i and BF^{P'} i+1 are sent 105, via a transmitter 9, to the aggregator node 5 over two anonymous communication channel 8,
- Several (two in the example) bloom filtered profiles flipped BF^{P'}i and BF^{P'} i+1 received by the aggregator node 5 are aggregated 106. More particularly, in this example the aggregation 106 identifies patterns of profiles bloom filtered from several end users comprising similar or same interest of contents or services (for example, as illustrated a pattern of 3 bits 1). More particularly, the aggregator node 5 computes the correlations between received bloom filtered profile BF^{P}i and BF^{P} i+1 and identifies popular patterns of bits set to 1 of the bloom filtered profiles (representing the end user profiles) and stores the identified patterns and their frequency for later use,
- external content Cl+1 with I ranging from 0 to n are selected 107 from a third-party content or service providers matching the profile bloom filtered aggregation of several end users comprising similar or same interest of contents or services. For that purpose, the aggregator node 5 checks if an element (item, tag, etc) is representative for the cluster by checking if it is included in a frequent pattern of bits set to 1 instead of checking if it appears in each user profile. Identifying the most frequent patterns of sequences of 1 can be done using an algorithm for frequent item set mining such as the APriori algorithm. When an external content (*e.g*., ads) provider would like to inject targeted external content Cl+1 to the cluster, the external content Cl+1 is hashed using the same hashing functions (in order to obtain a bloom filtered external content BF^{c} l+n) as for building the bloom filtered profile and matched against the stored patterns and a score is computed according to matched pattern frequency. External content matching scores could be also sorted between them and/or a threshold could be defined to decide whether an external content is suitable for a cluster,
- then, the selected external content 108 is sent to all cluster end users matching to the third-party content or service providers. The sending may be realized on the anonymous communication channel 8. The content(s) having the highest score(s) is/are then sent anonymously to the users of this cluster.

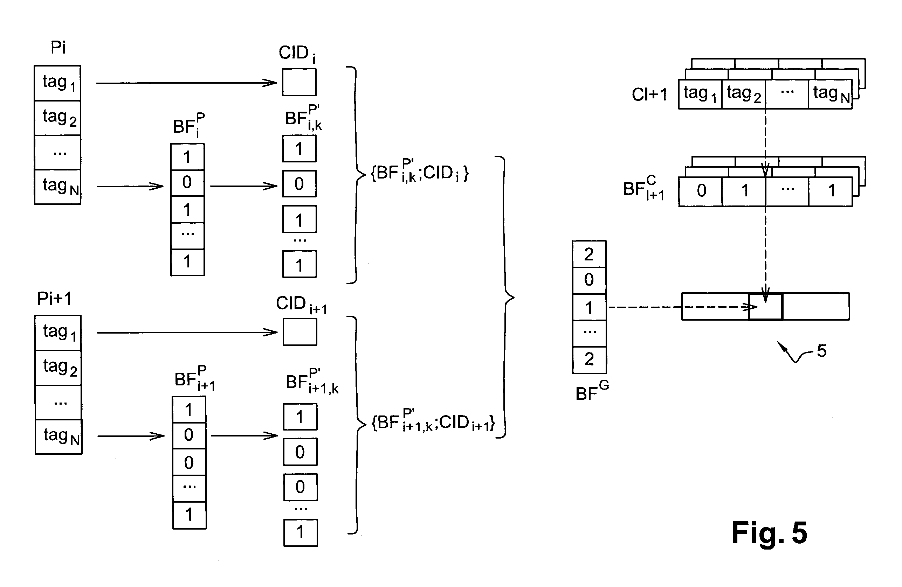

In a not limited embodiment illustrated in figure 5,
- Several (only two are depicted for the understanding of the embodiment) end user profile Pi, Pi+1 (with i ranging from 1 to n) of two end user is generated 101 via the profile generation module 2 of two client devices 1,
- two cluster IDs ClDi and CDi+1 corresponding to the end user profiles Pi and Pi+1 are generated 103 from the end user profile Pi and from the end user profile Pi+1 via the cluster identity computation modules 6 of the client devices 1,
- two bloom filtered profiles BF^{P} i and BF^{P} i+1 are generated 102 from the end user profiles respectively Pi and Pi+1 via the bloom filter module 3 of two client devices 1,
- two bloom filtered profile sliced BF^{P'}i,k and BF^{P'} i+1,k are generated 104 from the bloom filtered profiles respectively BF^{P} i and BF^{P} i+1 via the modifying module 7 of two client devices 1. Each bloom filtered profile sliced BF^{P'}i,k and BF^{P'} i+1,k contains one or several bloom filter position identifiers with the respective bit values BF^{P}_{i,k}.
- the cluster IDs ClDi and ClDi+1 generated and the bloom filtered profile sliced BF^{P'}i,k and BF^{P'}i+1,k are sent 105 , via the transmitter 9, to the aggregator node 5 over two anonymous communication channel 8, For a better user privacy, only 1-bit position should be communicated. But, for the sake of traffic optimization, multiple bit positions should be communicated at a time. Note that the slicing removes the correlations between profile bits and reduces possible attacks consisting in checking the presence of a particular item, such as long-tail ones, in any individual user profile.
- Several (two in the example) bloom filtered profile sliced BF^{P'}i,k and BF^{P'} i+1,k received by the aggregator node 5 are aggregated 106. The aggregator node 5 sums up the received values of each bit position from all users composing the cluster profile which keeps the total number of occurrence of each bit BF^{G}.
- external content Cl+1 with I ranging from 0 to n are selected 107 from a third-party content or service providers matching the profile bloom filtered aggregation of several end users comprising similar or same interest of contents or services. For that purpose, when an external content Cl+1 (*e.g*., ads) provider wants to inject targeted content to the cluster, the external content is hashed using the same hashing functions (in order to obtain a bloom filtered external content BF^{c} l+n) as for building the user bloom filter profiles and a score is computed in a way that accounts for high counter values: for example, by computing a cosine-based score. The higher scores would then reflect a better matching of the external content with the top most representative cluster elements. External content matching scores will then be sorted in order to select the external content items that fit the best to the interests of the cluster members.
- then, the selected external content 108 is sent to all cluster end users matching to the third-party content or service providers. The sending may be realized on the anonymous communication channel 8. The content(s) having the highest score(s) is/are then sent anonymously to the users of this cluster.

## Claims

1. A method (100) for privacy protection in personalized services, the method (100) comprising the steps of:
- Generate (101), via a profile generation module (2) of a client device (1), a profile (Pi) of an end user,
- Generate (102), via a bloom filter module (3) of the client device (1), a bloom filtered profile (BF^{P} i) from the end user profile (Pi),
- generate (103), via a cluster identity computation module (6) of the client device (1), a cluster ID (ClDi) corresponding to the end user profile (P),
- modify (104), via a modifying module (7) of the client device (1), the bloom filtered profile (BF^{P} i) to preserve user privacy,
- Send (105), via a transmitter (9) of the client device (1), the cluster ID (ClDi) determined and the bloom filtered profile modified (BF^{P'} i) to an aggregator node (5),
- Aggregate (106) the bloom filtered profile (BF^{P'} I, BF^{P'} i+1) received, this aggregation being realized by the aggregator node (5).

2. A method (100) as claimed in claim 1 wherein the cluster ID (ClDi) is determined (103) by a locality sensitive hashing applied on the end user profile (Pi).

3. A method (100) as claimed in claim 2 wherein the locality sensitive hashing is applied on the end user profile (Pi) generated in the step of generating (101).

4. A method (100) as claimed in claim 2 wherein the locality sensitive hashing is applied on the bloom filtered profile (BF^{P} i).

5. A method (100) as claimed in claim 1 wherein the sending (105) uses an anonymous communication channel (8).

6. A method (100) as claimed in claim 1 wherein the sending (105) uses an onion router.

7. A method (100) as claimed in claim 1 wherein the modifying (104) is realized by slicing the bloom filtered profile (BF^{P} i).

8. A method (100) as claimed in claim 1 wherein the modifying (104) is realized by random bit altering of the bloom filtered profile (BF^{P} i).

9. A method (100) according to one of any of the claims 1 to 8 wherein the aggregation (106) aggregates bloom filtered profiles modified (BF^{P'} i, BF^{P'} i+1) from several end users (Pi, Pi+1) comprising similar interest of contents or services.

10. A method (100) according to one of any of the claims 1 to 8 wherein the aggregation (106) identifies aggregates patterns of bloom filtered profiles modified (BF^{P'} i, BF^{P'} i+1) from several end users (Pi, Pi+1) comprising similar interest of contents or services.

11. A method (100) according to one of any of the claims 1 to 8 wherein the aggregation (106) computes frequency of bits in bloom filtered profiles modified (BF^{P'} i, BF^{P'} i+1) from several end users comprising similar interest of contents or services.

12. A method (100) according to one of any of the claims 9 to 11 comprising a step of selecting (107) external content (Cl+1) from a third-party content or service providers matching a bloom filtered profiles modified (BF^{P'} i, BF^{P'} i+1) aggregation of several end users comprising similar interest of contents or services.

13. A method (100) as claimed in claim 12 comprising a step of sending the selected external content (108) to several end users matching to the third-party content or service providers.

14. A method (100) as claimed in claim 13 wherein the sending (108) is realized on an anonymous communication channel.

15. Client device (1) for privacy protection in personalized services comprising:
• a profile generation module (2) construed and arranged to generate (101) a profile (Pi) of an end user,
• a bloom filter module (3) construed and arranged to generate a bloom filtered profile (BF^{P} i) from the end user profile (Pi),
• a modifying module (7) construed and arranged to modify the bloom filtered profile (BF^{P} i) to preserve user privacy,
• a cluster identity computation module (6) construed and arranged to generate a cluster ID (ClDi) corresponding to the end user profile (Pi),
• a transmitter (9) construed and arranged to send the cluster ID (ClDi) determined and the bloom filtered profile modified (BF^{P'} i) to an aggregator node (5).
